# EUROPEAN PATENT APPLICATION

(11) **EP 4 614 322 A1**
(43) Date of publication of application: **10.09.2025**
(21) Application number: 23896870.5
(22) Date of filing: 30.11.2023
(51) Int. Cl.: G06F 9/48

(54) **HETEROGENEOUS PROCESSOR AND RELATED SCHEDULING METHOD**

(30) Priority: 02.12.2022 CN 202211534517
(71) Applicant: Huawei Technologies Co., Ltd., Shenzhen, Guangdong 518129 (CN)
(72) Inventor: ZHOU, Yongbin, Shenzhen, Guangdong 518129 (CN); WANG, Ronghua, Shenzhen, Guangdong 518129 (CN); GUAN, Yuxiang, Shenzhen, Guangdong 518129 (CN)
(74) Representative: MERH-IP Matias Erny Reichl Hoffmann Patentanwälte PartG mbB
(86) International application number: PCT/CN2023/135404
(87) International publication number: WO 2024/114728

(57) **Abstract**

A heterogeneous processor is disclosed. The heterogeneous processor includes a plurality of processor cores of different sizes, and each of the plurality of processor cores includes a scenario classifier and a performance predictor. A scenario classifier in a first processor core obtains running information of the first processor core, where the running information includes one or more of an instruction stream characteristic and a memory running characteristic of running a target service by the first processor core, and the first processor core is any one of the plurality of processor cores; and determines a target scenario of the target service from a plurality of preset scenarios based on the running information. A performance predictor in the first processor core predicts target performance information based on the target scenario and the running information, where the target performance information is performance prediction information corresponding to the target service. A related scheduling method is further disclosed, so that performance or energy efficiency of the heterogeneous processor can be improved.

## Description

This application claims priority to Chinese Patent Application No. 202211534517.X, filed with the China National Intellectual Property Administration on December 2, 2022 and entitled "HETEROGENEOUS PROCESSOR AND RELATED SCHEDULING METHOD", which is incorporated herein by reference in its entirety.

### TECHNICAL FIELD

This application relates to the field of multi-core processors, and in particular, to a heterogeneous processor and a related scheduling method.

### BACKGROUND

A multi-core heterogeneous processor (which may also be referred to as a hybrid processor) is a hardware platform including a plurality of processor cores of different types. For example, the multi-core heterogeneous processor may include a performance core, an efficiency core, and a low-power core. The performance core can provide high performance, a high throughput, and a low latency, and can be used to ensure a high-performance scenario of a processor system. The efficiency core can provide an optimal energy efficiency ratio, and can be used to ensure a good-performance and low-energy-consumption scenario of the processor system. The low-power core can provide lowest power consumption, and can be used to ensure a lowest-power-consumption scenario of the processor system. Big-and-little-core scheduling of the multi-core heterogeneous processor is to sense, in real time, load of threads running on different processor cores, determine a scheduling policy under a performance constraint and an energy consumption constraint, and allocate different types of threads to processor cores with different energy efficiency for execution, so that optimal energy efficiency or best performance of the processor system is obtained. However, because performance and energy efficiency of different types of thread load on different types of processor cores in different scenarios are greatly non-linear and time-varying, it is difficult to accurately predict performance of the thread on different types of processor cores.

Therefore, how to determine performance of the thread on different types of processor cores and further determine a scheduling policy of the thread based on the performance to improve performance of the heterogeneous processor or energy efficiency of the heterogeneous processor is an urgent problem to be resolved.

### SUMMARY

A technical problem to be resolved in embodiments of this application is how to provide a heterogeneous processor and a related scheduling method, so as to determine performance of a thread on different types of processor cores and further determine a scheduling policy of the thread based on the performance, so that performance of the heterogeneous processor or energy efficiency of the heterogeneous processor is improved.

According to a first aspect, an embodiment of this application provides a heterogeneous processor. The heterogeneous processor includes a plurality of processor cores of different sizes, and each of the plurality of processor cores includes a scenario classifier and a performance predictor. A scenario classifier in a first processor core is configured to: obtain running information of the first processor core, where the running information includes one or more of an instruction stream characteristic and a memory running characteristic of running a target service by the first processor core, and the first processor core is any one of the plurality of processor cores; and determine a target scenario of the target service from a plurality of preset scenarios based on the running information. A performance predictor in the first processor core is configured to: predict target performance information based on the target scenario and the running information, where the target performance information is performance prediction information corresponding to the target service.

In this embodiment of the present invention, a scenario classifier in the processor core may obtain running information of a thread, of a current processor core, running a target service (which may include an instruction stream characteristic, a data access characteristic, a memory running characteristic, and the like of running the target service by the processor core), to determine a service scenario of the target service based on the running information. Next, a performance predictor in the processor core may predict, based on the running information of the current processor core and the service scenario of the target service, performance of the thread, of the current processor core, migrated to another processor core of a different type, so that a scheduling policy of the thread can be subsequently determined based on a prediction result, to improve performance of the heterogeneous processor or improve energy efficiency of the heterogeneous processor. In some embodiments, coarse-grained performance prediction is performed only based on information such as processor core utilization of an application (that is, a service) collected by a processor subsystem, and a real-time requirement cannot be met. Consequently, performance and energy efficiency are lost during scheduling.

In a possible implementation, the performance predictor in each processor core includes a plurality of performance subpredictors and a target selector, and each of the plurality of performance subpredictors corresponds to a performance prediction algorithm of one preset scenario. The performance predictor in the first processor core is specifically configured to: determine corresponding performance information by using each performance subpredictor based on the corresponding performance prediction algorithm of the preset scenario and the running information of the first processor core; and obtain, by using the target selector, a plurality of pieces of performance information respectively corresponding to the plurality of performance subpredictors, and determine the target performance information from the plurality of pieces of performance information based on the target scenario.

In this embodiment of the present invention, because each performance subpredictor corresponds to a performance prediction algorithm of one preset scenario, each performance subpredictor may predict, based on the performance prediction algorithm of the performance subpredictor and the running information, the performance of the thread, of the current processor core, migrated to the another processor core of the different type (it should be emphasized that each type of performance prediction algorithm independently selects a processor event and a storage subsystem event to determine the performance of the thread, of the current processor core, migrated to the another processor core of the different type). Further, the target selector may select, based on the service scenario output by the scenario classifier, one of a plurality of prediction results as a target prediction result, so that the performance of the thread, of the current processor core, migrated to the another processor core of the different type can be more accurately predicted.

In a possible implementation, the performance predictor in the first processor core is specifically configured to: determine, from a plurality of performance prediction algorithms, a target performance prediction algorithm corresponding to the target scenario, where the plurality of performance prediction algorithms are in a one-to-one correspondence with the plurality of preset scenarios; and determine the target performance information based on the running information of the first processor core and the target performance prediction algorithm.

In this embodiment of the present invention, because the performance predictor includes the performance prediction algorithms respectively corresponding to the plurality of preset scenarios, a performance prediction algorithm corresponding to the service scenario may be first selected from the plurality of performance prediction algorithms based on the service scenario output by the scenario classifier, and prediction may be performed based on the performance prediction algorithm and the running information, so that the performance of the thread, of the current processor core, migrated to the another processor core of the different type can be more accurately predicted.

In a possible implementation, the performance predictor in the first processor core is further configured to: determine, based on sample data, the plurality of preset scenarios and the plurality of performance prediction algorithms respectively corresponding to the plurality of preset scenarios, where the sample data includes instruction stream characteristics and memory running characteristics respectively corresponding to the plurality of preset scenarios.

In this embodiment of the present invention, the sample data may be understood as the instruction stream characteristics and the memory running characteristics respectively corresponding to the plurality of scenarios, so that the sample data can be trained based on a training algorithm, and the plurality of preset scenarios and a performance prediction algorithm corresponding to each preset scenario can be obtained.

In a possible implementation, an operating system runs on the heterogeneous processor. The performance predictor in the first processor core is further configured to send the target performance information to the operating system. The operating system is configured to: determine a second processor core from the plurality of processor cores based on the target performance information, and schedule the target service to the second processor core for processing.

In this embodiment of the present invention, after predicting performance of the thread on different types of processor cores, the processor core may send prediction results to an operating system, so that the operating system can determine the scheduling policy of the thread based on the prediction results, to improve performance of the heterogeneous processor.

In a possible implementation, the first processor core further includes a first sampling unit and a second sampling unit. The first sampling unit is configured to obtain the instruction stream characteristic of running the target service by the first processor core, where the instruction stream characteristic includes one or more of a type of an instruction, a quantity of instructions, and a dynamic event of the processor core. The second sampling unit is configured to obtain the memory running characteristic of running the target service by the first processor core, where the memory running characteristic includes one or more of access bandwidth, an access latency, a miss rate, and a request queue occupancy rate.

In this embodiment of the present invention, the first sampling unit may be understood as a processor event sampling unit, and may be configured to collect the instruction stream characteristic of running the target service by the first processor core currently, that is, information such as the type of the instruction executed by the first processor core in a process of running the target service and the quantity of instructions (which may be understood as internal information of the processor core). The second sampling unit may be understood as a storage subsystem event sampling unit, and may be configured to collect the memory running characteristic (which may be understood as external information of the processor core) of running the target service by the first processor core currently, that is, information such as the access bandwidth, the access latency, the miss rate, and the request queue occupancy rate during access of the first processor core to a storage subsystem. Further, the scenario classifier in the first processor core may determine the service scenario of the target service based on the information such as the type of the instruction executed by the first processor core when the first processor core runs the target service and the quantity of instructions and the information such as the access bandwidth, the access latency, the miss rate, and the request queue occupancy rate during access of the first processor core to the storage subsystem, and then predict, based on the service scenario of the target service, performance of the target service scheduled to another processor core.

According to a second aspect, this application provides a scheduling method. The scheduling method is applied to a heterogeneous processor. The heterogeneous processor includes a plurality of processor cores of different sizes, and each of the plurality of processor cores includes a scenario classifier and a performance predictor. The method includes: A scenario classifier in a first processor core obtains running information of the first processor core, where the running information includes one or more of an instruction stream characteristic and a memory running characteristic of running a target service by the first processor core, and the first processor core is any one of the plurality of processor cores; and determines a target scenario of the target service from a plurality of preset scenarios based on the running information. A performance predictor in the first processor core predicts target performance information based on the target scenario and the running information, where the target performance information is performance prediction information corresponding to the target service.

In a possible implementation, the performance predictor in each processor core includes a plurality of performance subpredictors and a target selector, and each of the plurality of performance subpredictors corresponds to a performance prediction algorithm of one preset scenario. Predicting the target performance information based on the target scenario and the running information includes: determining corresponding performance information by using each performance subpredictor based on the corresponding performance prediction algorithm of the preset scenario and the running information of the first processor core; and obtaining, by using the target selector, a plurality of pieces of performance information respectively corresponding to the plurality of performance subpredictors, and determining the target performance information from the plurality of pieces of performance information based on the target scenario.

In a possible implementation, predicting the target performance information based on the target scenario and the running information includes: determining, from a plurality of performance prediction algorithms, a target performance prediction algorithm corresponding to the target scenario, where the plurality of performance prediction algorithms are in a one-to-one correspondence with the plurality of preset scenarios; and determining the target performance information based on the running information of the first processor core and the target performance prediction algorithm.

In a possible implementation, the method further includes: The performance predictor in the first processor core determines, based on sample data, the plurality of preset scenarios and the plurality of performance prediction algorithms respectively corresponding to the plurality of preset scenarios, where the sample data includes instruction stream characteristics and memory running characteristics respectively corresponding to the plurality of preset scenarios.

In a possible implementation, an operating system runs on the heterogeneous processor, and the method further includes: The performance predictor in the first processor core sends the target performance information to the operating system. The operating system determines a second processor core from the plurality of processor cores based on the target performance information, and schedules the target service to the second processor core for processing.

In a possible implementation, the first processor core further includes a first sampling unit and a second sampling unit, and the method further includes: The first sampling unit obtains the instruction stream characteristic of running the target service by the first processor core, where the instruction stream characteristic includes one or more of a type of an instruction, a quantity of instructions, and a dynamic event of the processor core. The second sampling unit obtains the memory running characteristic of running the target service by the first processor core, where the memory running characteristic includes one or more of access bandwidth, an access latency, a miss rate, and a request queue occupancy rate.

According to a third aspect, this application provides a computer storage medium. The computer storage medium stores a computer program. When the computer program is executed by a processor, the method according to any one of the implementations of the second aspect is implemented.

According to a fourth aspect, this application provides a chip system. The chip system includes a processor configured to support an electronic device in implementing the functions in the second aspect, for example, generating or processing information in the foregoing scheduling method. In a possible design, the chip system further includes a memory, and the memory is configured to store program instructions and data that are necessary for the electronic device. The chip system may include a chip, or may include a chip and another discrete component.

According to a fifth aspect, this application provides a computer program product. The computer program includes instructions. When the computer program is executed by a computer, the computer is enabled to perform the method according to any one of the implementations of the second aspect.

### BRIEF DESCRIPTION OF DRAWINGS

FIG. 1 is a diagram of a structure of a multi-core heterogeneous processor according to an embodiment of the present invention;
FIG. 2 is a diagram of a structure of a heterogeneous processor according to an embodiment of the present invention;
FIG. 3 is a diagram of an internal structure of a first processor core according to an embodiment of the present invention;
FIG. 4 is a diagram of a heterogeneous processor system according to an embodiment of the present invention;
FIG. 5 is a diagram of an internal structure of a processor core according to an embodiment of the present invention;
FIG. 6 is a diagram of an internal structure of another processor core according to an embodiment of the present invention;
FIG. 7 is a training flowchart of a performance prediction algorithm according to an embodiment of the present invention;
FIG. 8 is a diagram of big-and-little-core scheduling according to an embodiment of the present invention; and
FIG. 9 is a flowchart of a scheduling method according to an embodiment of the present invention.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

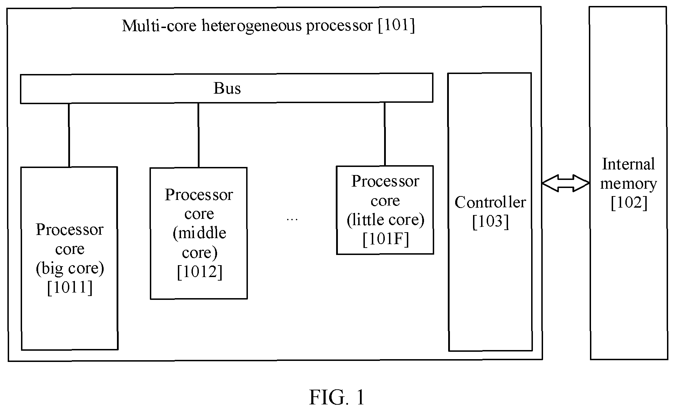

An embodiment of this application provides a multi-core heterogeneous processor. FIG. 1 is a diagram of a structure of a multi-core heterogeneous processor according to an embodiment of the present invention. The multi-core heterogeneous processor 101 means that a plurality of processor cores (which may also be referred to as processor cores) are integrated in one chip. These processor cores have different functions and structures and are integrated into a same chip in an effective manner, and applications are allocated to different processor cores in an effective division manner for parallel processing, to improve performance of a processor system. The multi-core heterogeneous processor 101 may be located in any electronic device, for example, a computer, a computer, a mobile phone, a tablet computer, a personal digital assistant, or a device such as a smart wearable device, a smart vehicle-mounted device, or a smart home appliance. The multi-core heterogeneous processor 101 may be specifically a chip, a chip set, or a circuit board on which a chip or a chip set is mounted. The chip, the chip set, or the circuit board on which the chip or the chip set is mounted may operate when driven by necessary software. Details are described below.

A plurality of processor cores (for example, there are F processor cores in FIG. 1, where F is an integer greater than 1), for example, a processor core 1011, a processor core 1012, ..., and a processor core 101F, are most important components of a central processing unit (central processing unit, CPU), where a processor core is short for a processor core and is also referred to as a core. The processor core is manufactured from single-crystal silicon through a specific production process. The processor core performs all of computing, reception or storage of commands, and data processing that are on the CPU. On the plurality of processor cores, an operating system, a file system (such as a flash file system F2FS), an application, or the like may run, to control a plurality of hardware or software elements connected to the processor, and various data may be processed and operations may be performed. Each of the plurality of processor cores may load instructions or data stored in a storage device (which may be understood as an external memory, such as a magnetic disk) to an internal memory 102, and invoke instructions or data that needs to be operated to the processor core for operation. After the operation is completed, the processor core temporarily stores a result in the internal memory 102, and stores, in the storage device (that is, the external memory) by using a controller 103, instructions or data that needs to be stored for a long time. In some embodiments, the memory in the multi-core heterogeneous processor 101 may be a cache (Cache). The cache may include one or more of a level 1 cache (L1 Cache), a level 2 cache (L2 Cache), a level 3 cache (L3 Cache), and the like. The cache may store instructions or data that is just used or cyclically used by the multi-core heterogeneous processor 101. If the multi-core heterogeneous processor 101 needs to use the instructions or the data again, the instructions or the data may be directly invoked from the cache. This avoids repeated access, reduces waiting time of the processor core, and improves efficiency of the processor system. It may be understood that the processor core 1011 and (F-1) processor cores may be coupled to each other and communicate with each other through a bus or in another manner. This is not specifically limited herein.

In this embodiment of the present invention, the processor cores are heterogeneous, in other words, structures of different processor cores (1011, 1012, ..., and 101F) are different, and the processor cores may be classified into a big core, a middle core, a little core, and the like based on performance. Types of the processor core may include a performance core (which may also be referred to as a big core), an efficiency core (which may also be referred to as a middle core), a low-power core (which may also be referred to as a little core), and the like. The performance core can provide high performance, a high throughput, and a low latency, and can be used to ensure a high-performance scenario of the processor system. The efficiency core can provide an optimal energy efficiency ratio, and can be used to ensure a good-performance and low-energy-consumption scenario of the processor system. The low-power core can provide lowest power consumption, and can be used to ensure a lowest-power-consumption scenario of the processor system. Big-and-little-core scheduling of the multi-core heterogeneous processor 101 is to sense, in real time, load of threads running on different processor cores, determine a scheduling policy of a thread under a performance constraint and an energy consumption constraint, and allocate different types of threads to processor cores with different energy efficiency for execution, so that optimal energy efficiency or best performance of the processor system is obtained.

In this embodiment of the present invention, a key problem of big-and-little-core scheduling of the multi-core heterogeneous processor 101 is collecting performance data of a thread (or process) running on a current processor core A, and predicting performance of the thread (or process) that is assumed to be migrated to a processor core B of a different type, so that a scheduling policy of the thread (or process) can be determined based on a prediction result, to improve performance of the multi-core heterogeneous processor 101. How to predict performance of the thread (or process) running on different processor cores is described in detail subsequently, and details are not described herein.

The internal memory (Memory) 102, briefly referred to as an internal memory, may be located outside the multi-core heterogeneous processor 101, and is usually a volatile memory. When a power failure occurs, content stored on the internal memory 102 is lost. The internal memory 102 may also be referred to as a main memory. The internal memory 102 in this application includes a readable and writable running internal memory, and is configured to temporarily store operation data of the plurality of processor cores and exchange data with the storage device or another external memory. The internal memory 102 may serve as a storage medium for temporary data of an operating system or another running program. In this application, a task scenario running on a current processor core may be predicted based on a data access characteristic of accessing the internal memory 102 by the processor core. The internal memory 102 may include one or more of a dynamic random access memory (DRAM), a static random access memory (SRAM), a synchronous dynamic random access memory (SDRAM), and the like. The DRAM includes a double data rate synchronous dynamic random access memory (Double Data Rate Synchronous Dynamic Random Access Memory, DDR SDRAM, DDR for short), a double data rate 2 (DDR2) synchronous dynamic random access memory, a double data rate 3 (DDR3) synchronous dynamic random access memory, a low power double data rate 4 (Low Power Double Data Rate 4, LPDDR4) synchronous dynamic random access memory, a low power double data rate 5 (Low Power Double Data Rate 5, LPDDR5) synchronous dynamic random access memory, and the like.

The controller 103 is usually configured to manage and control communication between the multi-core heterogeneous processor 101 and an external storage device (such as a magnetic disk), and provide a standard (for example, a universal flash storage UFS standard) interface for communication between the multi-core heterogeneous processor 101 and the external storage device. It should be noted that, FIG. 1 does not show the external storage device, but the multi-core heterogeneous processor 101 can be connected to both the internal memory 102 and the external storage device. Specifically, the controller 103 may transfer a command (for example, a write, read, or erase command) and data to the external storage device based on a read/write request sent by the multi-core heterogeneous processor 101, and feed back an event (for example, a command completion event, a command status event, or a hardware error event) to the multi-core heterogeneous processor 101 based on a data reading/writing result of the storage device. For the command or data sent by the multi-core heterogeneous processor 101, the controller 103 may convert, through encapsulation, the command or the data into a data packet that supports a protocol. For data received by the multi-core heterogeneous processor 101, the controller 103 performs a reverse operation.

It may be understood that the structure of the multi-core heterogeneous processor 101 in FIG. 1 is merely an implementation for some examples provided in embodiments of the present invention. The structure of the multi-core heterogeneous processor 101 in embodiments of the present invention includes but is not limited to the foregoing implementation.

The following describes embodiments of the present invention with reference to the accompanying drawings in embodiments of the present invention.

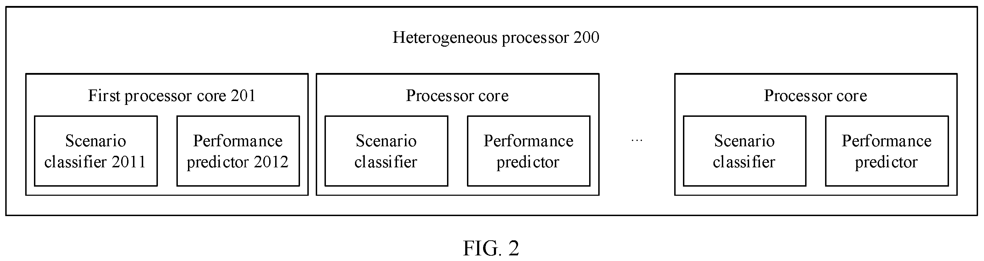

FIG. 2 is a diagram of a structure of a heterogeneous processor according to an embodiment of the present invention. The following describes the heterogeneous processor in this embodiment of the present invention in detail with reference to FIG. 2. As shown in FIG. 2, the heterogeneous processor 200 may be configured to predict performance of a thread on different types of processor cores, and may determine a scheduling policy of the thread based on a prediction result, to improve performance of the heterogeneous processor or improve energy efficiency of the heterogeneous processor. It should be noted that the heterogeneous processor 200 provided in this embodiment of the present invention may include some or all structures and functions of the multi-core heterogeneous processor 101 in FIG. 1. The heterogeneous processor 200 may include but is not limited to a plurality of processor cores of different sizes, and each of the plurality of processor cores includes a scenario classifier and a performance predictor.

A scenario classifier 2011 in a first processor core 201 is configured to obtain running information of the first processor core 201.

Specifically, the running information includes one or more of an instruction stream characteristic, a data access characteristic, and a memory running characteristic of running a target service by the first processor core 201, and the first processor core 201 is any one of the plurality of processor cores. The target service may be understood as any application.

It should be noted that the plurality of processor cores included in the heterogeneous processor 200 may have different performance, and may be classified into a big core, a middle core, a little core, and the like based on performance. For example, the processor cores in the heterogeneous processor 200 may be a performance core (which may be referred to as a big core), an efficiency core (which may be referred to as a middle core), a low-power core (which may be referred to as a little core), and the like. The performance core can provide high performance, a high throughput, and a low latency, and can be used to ensure a high-performance scenario of a processor system. The efficiency core can provide an optimal energy efficiency ratio, and can be used to ensure a good-performance and low-energy-consumption scenario of the processor system. The low-power core can provide lowest power consumption, and can be used to ensure a lowest-power-consumption scenario of the processor system. The first processor core 201 may be any one of the plurality of processor cores, and a thread of the target service may run on the first processor core 201.

Optionally, when the first processor core 201 is determined, a currently optimal processor core may be selected from the plurality of processor cores as the first processor core 201 based on current running statuses of the processor cores. Further, the thread of the target service may be scheduled to the first processor core 201 for processing.

In a running process, because the running statuses of the processor cores in the heterogeneous processor 200 change in real time, the first processor core 201 is not necessarily the optimal processor core in the running process. Therefore, the scenario classifier 2011 in the first processor core 201 may obtain, after a preset time period, the running information of running the target service by the first processor core 201, to subsequently determine a service scenario of the target service, and further predict, based on the service scenario of the target service, performance of the target service scheduled to another processor core.

In a possible implementation, the first processor core 201 further includes a first sampling unit 2013 and a second sampling unit 2014. The first sampling unit 2013 is configured to obtain the instruction stream characteristic of running the target service by the first processor core 201, where the instruction stream characteristic includes one or more of a type of an instruction, a quantity of instructions, and a dynamic event of the processor core. The second sampling unit 2014 is configured to obtain the memory running characteristic of running the target service by the first processor core 201, where the memory running characteristic includes one or more of access bandwidth, an access latency, a miss rate, and a request queue occupancy rate.

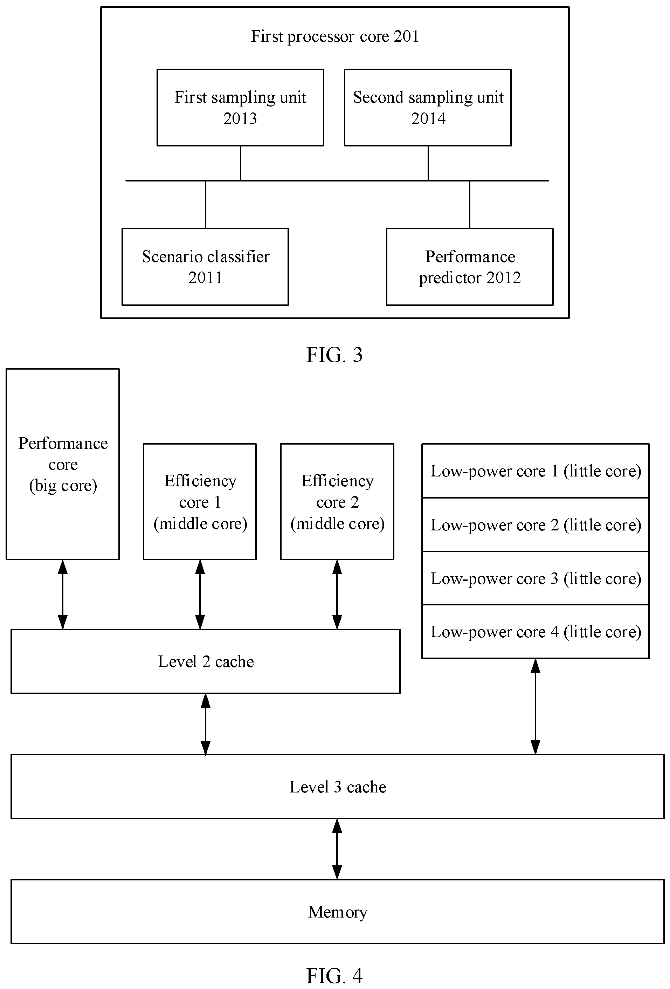

FIG. 3 is a diagram of an internal structure of a first processor core according to an embodiment of the present invention. The first processor core 201 in the figure may further include a first sampling unit 2013 and a second sampling unit 2014. The first sampling unit 2013 may be understood as a processor event sampling unit, and may be configured to collect an instruction stream characteristic of running a target service by the first processor core 201 currently, that is, information such as a type of an instruction executed by the first processor core 201 in a process of running the target service, a quantity of instructions, and a dynamic event of the processor core. Characteristics of the dynamic event of the processor core may include but are not limited to a level 1 data or instruction cache miss, a branch predictor miss, a branch predictor error, processor queue occupancy, a data and instruction translation lookaside buffer miss, transmission bandwidth, pipeline congestion, hardware prefetch matching, and the like. The second sampling unit 2014 may be understood as a storage subsystem event sampling unit, and may be configured to collect a memory running characteristic (where a memory may include an internal memory and a cache, and the cache may include a level 1 cache, a level 2 cache, a level 3 cache, and the like) of running the target service by the first processor core 201 currently, that is, information such as access bandwidth, an access latency, a miss rate, and a request queue occupancy rate during access of the first processor core 201 to a storage subsystem. Further, a scenario classifier 2011 in the first processor core 201 may determine a service scenario of the target service based on the information such as the type of the instruction executed by the first processor core 201 when the first processor core 201 runs the target service and the quantity of instructions and the information such as the access bandwidth, the access latency, the miss rate, and the request queue occupancy rate during the access of the first processor core 201 to the storage subsystem, and then predict, based on the service scenario of the target service, performance of the target service scheduled to another processor core.

It should be noted that each processor core in the heterogeneous processor 200 may include a processor event sampling unit and a storage subsystem event sampling unit that are respectively configured to obtain an instruction stream characteristic (which may be understood as internal information of the processor core) and a memory running characteristic (which may be understood as external information of the processor core) of the corresponding processor core.

The scenario classifier 2011 in the first processor core 201 is further configured to determine a target scenario of the target service from a plurality of preset scenarios based on the running information.

Specifically, the plurality of preset scenarios may be a game scenario, a reading scenario, a video scenario, a life service scenario, and the like. A type of the preset scenario is not specifically limited in this application. After obtaining the running information of the first processor core 201, the scenario classifier 2011 in the first processor core 201 may analyze characteristics such as the type of the instruction executed by the first processor core 201 when the first processor core 201 runs the target service and the quantity of instructions, and characteristics such as the access bandwidth, the access latency, the miss rate, and the request queue occupancy rate during access of the first processor core 201 to the storage subsystem. In this way, the scenario classifier can determine, based on the foregoing characteristics, the service scenario of the target service from the plurality of preset scenarios, for example, the target service is a game service; and then predict, based on the service scenario of the target service, the performance of the target service scheduled to the another processor core.

For example, as shown in FIG. 4, FIG. 4 is a diagram of a heterogeneous processor system according to an embodiment of the present invention. The heterogeneous processor in the figure may include a performance core (a big core), an efficiency core 1 (a middle core), an efficiency core 2 (a middle core), a low-power core 1 (a little core), a low-power core 2 (a little core), a low-power core 3 (a little core), a low-power core 4 (a little core), and the like. The big core and the middle core may interact with a level 2 cache in a running process, and the little core may interact with a level 3 cache in a running process. A thread of a target service may run on any processor core. It may be assumed herein that the target service initially runs on the efficiency core 1. In a running process, a scenario classifier in the efficiency core 1 may be classified based on a characteristic of thread load, and each classification represents a different scenario. Input of the scenario classifier is partially a processor event, and partially a storage subsystem event, such as events generated by an instruction cache, a data cache, the level 2 cache, the level 3 cache, and a memory controller. Further, the scenario classifier may determine a service scenario of the target service based on the processor event and the storage subsystem event, and may predict, based on the service scenario of the target service, performance of the target service scheduled to another processor core. In some embodiments, only performance of the target service scheduled to a processor core of another type needs to be predicted, and performance of the target service scheduled to a processor core of a same type does not need to be predicted.

It should be noted that the scenario classifier in the processor core may be implemented by using software, or may be implemented by using hardware. This is not specifically limited in this application.

Optionally, the scenario classifier in the processor core may be a linear classifier, and the linear classifier is configured to perform scenario classification. Input of the linear classifier is events from a processor and a storage subsystem, and output of the linear classifier is a scenario category of the target service. A quantity of scenario categories may be determined based on a precision requirement of classification, a computing capability of the system, and the like.

Optionally, the scenario classifier in the processor core may alternatively be implemented by using a perceptron model, and the perceptron is corrected based on online feedback. The scenario classifier in the processor core may alternatively be implemented by using an artificial neural network. The scenario classifier in the processor core may alternatively be provided by using an offline-trained model.

A performance predictor 2012 in the first processor core 201 is configured to predict, based on the target scenario and the running information, target performance information corresponding to the target service.

In some embodiments, the target performance information may include performance prediction information of the target service scheduled to the plurality of processor cores. The target performance information may be understood as performance of a thread, of a current processor core, assumed to be migrated to another processor core of a different type, and a result of the target performance information may be a correlation coefficient, or may be an enumerated value, for example, a significant improvement, a slight improvement, basically no change, a slight decrease, or a significant decrease. The performance prediction information may be understood as a performance comparison result between the another processor core and the current processor core on an assumption that the thread of the current processor core is migrated to the another processor core. For example, if a thread of the efficiency core 1 is migrated to the performance core, performance is greatly improved. In this application, the performance of the thread, of the current processor core, migrated to the another processor core of the different type is determined by using the performance predictor 2012, and the performance predictor 2012 may use output of the scenario classifier 2011 as input, and may select a corresponding performance prediction algorithm by inputting a scenario type of the target service, to predict the performance of the target service scheduled to the another processor core.

It should be noted that, each type of performance prediction algorithm independently selects a processor event and a storage subsystem event to determine the performance of the thread, of the current processor core, migrated to the another processor core of the different type.

It should be further noted that the performance predictor in the processor core may be implemented by using software, or may be implemented by using hardware. This is not specifically limited in this application.

Next, for how the performance predictor 2012 predicts, based on the target scenario and the running information, the target performance information corresponding to the target service, two specific implementations are provided in embodiments of this application. Detailed descriptions are as follows.

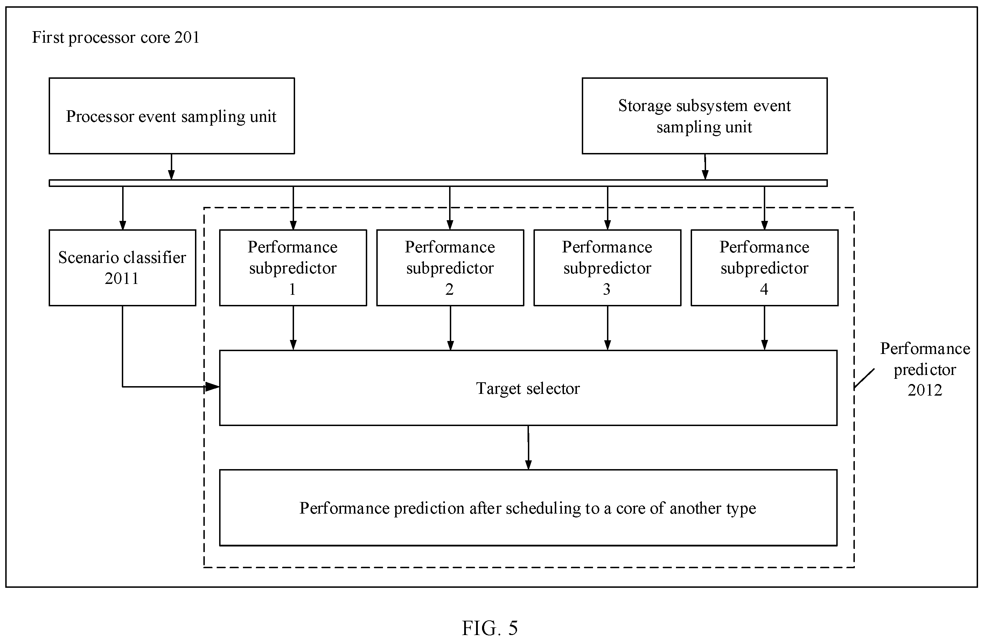

First, FIG. 5 is a diagram of an internal structure of a processor core according to an embodiment of the present invention. A performance predictor 2012 in each processor core in the figure includes a plurality of performance subpredictors and a target selector, and each of the plurality of performance subpredictors corresponds to a performance prediction algorithm of one preset scenario. The performance predictor 2012 in the first processor core 201 is specifically configured to: determine corresponding performance information by using each performance subpredictor based on the corresponding performance prediction algorithm of the preset scenario and the running information of the first processor core 201; and obtain, by using the target selector, a plurality of pieces of performance information respectively corresponding to the plurality of performance subpredictors, and determine the target performance information from the plurality of pieces of performance information based on the target scenario.

Specifically, the instruction stream characteristic (for example, various processor events) of running the target service by the first processor core 201 may be collected by using the processor event sampling unit in the first processor core 201, or the memory running characteristic (for example, various storage subsystem events) of running the target service by the first processor core 201 may be collected by using the storage subsystem event sampling unit in the first processor core 201, so that the scenario classifier 2011 and each performance subpredictor can obtain the running information of running the target service by the first processor core 201. Because each performance subpredictor corresponds to a performance prediction algorithm of one preset scenario, each performance subpredictor may predict, based on the performance prediction algorithm of the performance subpredictor and the running information, the performance of the thread, of the current processor core, migrated to the another processor core of the different type (it should be emphasized that each type of performance prediction algorithm independently selects a processor event and a storage subsystem event to determine the performance of the thread, of the current processor core, migrated to the another processor core of the different type). Further, the target selector may select, based on the service scenario output by the scenario classifier 2011, one of a plurality of prediction results as a target prediction result, so that the performance of the thread, of the current processor core, migrated to the another processor core of the different type can be more accurately predicted.

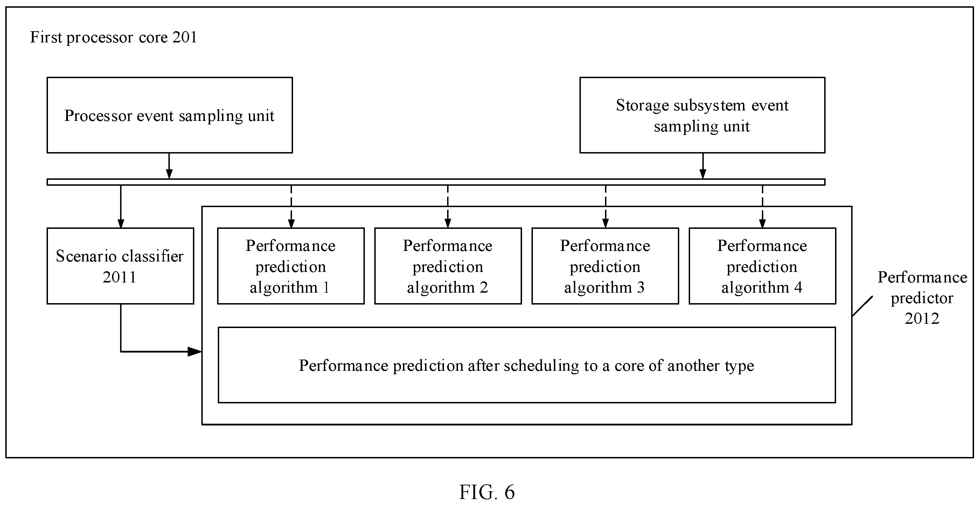

Second, FIG. 6 is a diagram of an internal structure of another processor core according to an embodiment of the present invention. The performance predictor 2012 in the first processor core 201 in the figure is specifically configured to: determine, from a plurality of performance prediction algorithms, a target performance prediction algorithm corresponding to the target scenario, where the plurality of performance prediction algorithms are in a one-to-one correspondence with the plurality of preset scenarios; and determine the target performance information based on the running information of the first processor core 201 and the target performance prediction algorithm.

Specifically, the instruction stream characteristic (for example, various processor events) of running the target service by the first processor core 201 may be collected by using the processor event sampling unit in the first processor core 201, or the memory running characteristic (for example, various storage subsystem events) of running the target service by the first processor core 201 may be collected by using the storage subsystem event sampling unit in the first processor core 201, so that the scenario classifier 2011 and the performance predictor 2012 can obtain the running information of running the target service by the first processor core 201. Because the performance predictor 2012 includes the performance prediction algorithms respectively corresponding to the plurality of preset scenarios, the performance prediction algorithm corresponding to the service scenario may be first selected from the plurality of performance prediction algorithms based on the service scenario output by the scenario classifier 2011, to predict, according to the performance prediction algorithm and the running information, the performance of the thread, of the current processor core, migrated to the another processor core of the different type (it should be emphasized that each type of performance prediction algorithm independently selects a processor event and a storage subsystem event to determine the performance of the thread, of the current processor core, migrated to the another processor core of the different type).

In a possible implementation, the performance predictor 2012 in the first processor core 201 is further configured to: determine, based on sample data, the plurality of preset scenarios and the plurality of performance prediction algorithms respectively corresponding to the plurality of preset scenarios, where the sample data includes instruction stream characteristics and memory running characteristics respectively corresponding to the plurality of preset scenarios.

Specifically, the sample data may be understood as the instruction stream characteristics and the memory running characteristics respectively corresponding to the plurality of scenarios, so that the sample data can be trained based on a training algorithm, and the plurality of preset scenarios and a performance prediction algorithm corresponding to each preset scenario can be obtained.

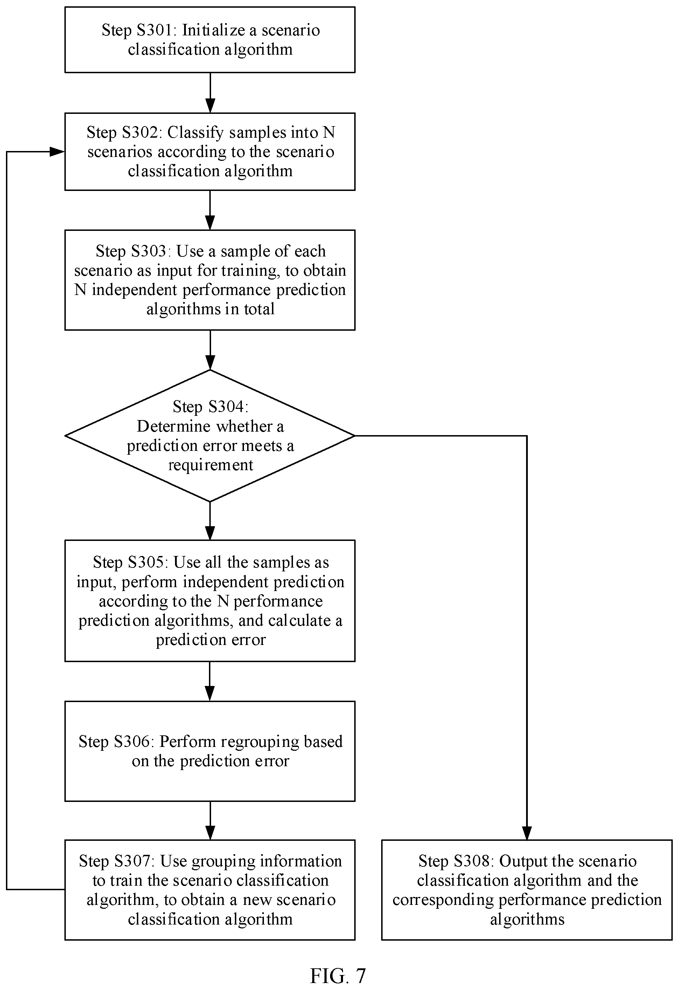

For example, as shown in FIG. 7, FIG. 7 is a training flowchart of a performance prediction algorithm according to an embodiment of the present invention. In the figure, a preset scenario and a performance prediction algorithm may be jointly trained and optimized, to implement collaborative optimization and achieve optimal precision. A detailed procedure is as follows.

Step S301: Initialize a scenario classification algorithm. Specifically, an initial scenario classification algorithm may be obtained based on another algorithm through characteristic clustering.

Step S302: Classify samples into N scenarios based on the scenario classification algorithm. Specifically, the scenario classification algorithm may be used to classify load, and sample points for training may be classified into N types.

Step S303: Use a sample of each scenario as input for training, to obtain N independent performance prediction algorithms in total. Specifically, the sample points classified into the N types are independently used for regression of each type of performance prediction algorithm, to obtain N performance prediction algorithms.

Step S304: Determine whether a prediction error meets a requirement. Specifically, each performance prediction algorithm is used to calculate an error for a sample point in a current group. When the prediction error meets the requirement, an iterative training process is exited, and step S308 is performed. If the prediction error does not meet the requirement, step S305 is performed.

Step S305: Use all the samples as input, perform independent prediction based on the N performance prediction algorithms, and calculate a prediction error. Specifically, all the sample points are used as input, independent prediction is performed on all the sample points based on the N performance prediction algorithms obtained through training in step S303, and errors of each sample point under different performance prediction algorithms are calculated.

Step S306: Perform regrouping based on the prediction error. Specifically, based on the error calculated in step S305, each sample point is assigned to a group with a smallest error. In this method, all the sample points may be regrouped into N groups.

Step S307: Use grouping information to train the scenario classification algorithm, to obtain a new scenario classification algorithm. Specifically, grouping information of the sample points in step S306 may be used as input to obtain the new scenario classification algorithm through training. The new scenario classification algorithm obtained through training in step S307 re-enters step S302, to repeat an iteration process in step S302. The entire procedure is repeated for cyclic iteration. The iteration ends when the error requirement in step S304 is met.

Step S308: Output the scenario classification algorithm and the corresponding performance prediction algorithms. Specifically, the scenario classification algorithm and the corresponding performance prediction algorithms may be output.

In a possible implementation, an operating system runs on the heterogeneous processor 200. The performance predictor 2012 in the first processor core 201 is further configured to send the target performance information to the operating system. The operating system is configured to: determine a second processor core from the plurality of processor cores based on the target performance information, and schedule the target service to the second processor core for processing.

Specifically, the second processor core is one of the plurality of processor cores. In some embodiments, the second processor core and the first processor core are different processor cores. If the operating system determines, based on the target performance information, that the thread needs to be scheduled, it may be determined that one of processor cores other than the first processor core is the second processor core. In some embodiments, the second processor core and the first processor core may be a same processor core. If the operating system determines, based on the target performance information, that the thread does not need to be scheduled, the second processor core is the first processor core, which indicates that the thread does not need to be scheduled. After predicting performance of the thread on different types of processor cores, the processor core may send prediction results to the operating system, so that the operating system can determine the scheduling policy of the thread based on the prediction results, to improve performance of the heterogeneous processor or improve energy efficiency of the heterogeneous processor.

Optionally, after receiving the prediction result sent by the processor core, the operating system may determine, based on the prediction result, one of the plurality of processor cores as a target processor core (namely, the second processor core). In this process, the operating system may make a decision based on factors such as a frequency and a voltage of the processor core.

In a possible implementation, a linear regression model is used to predict impact of a processor frequency on performance, and may be further used to predict impact of a storage subsystem frequency on performance.

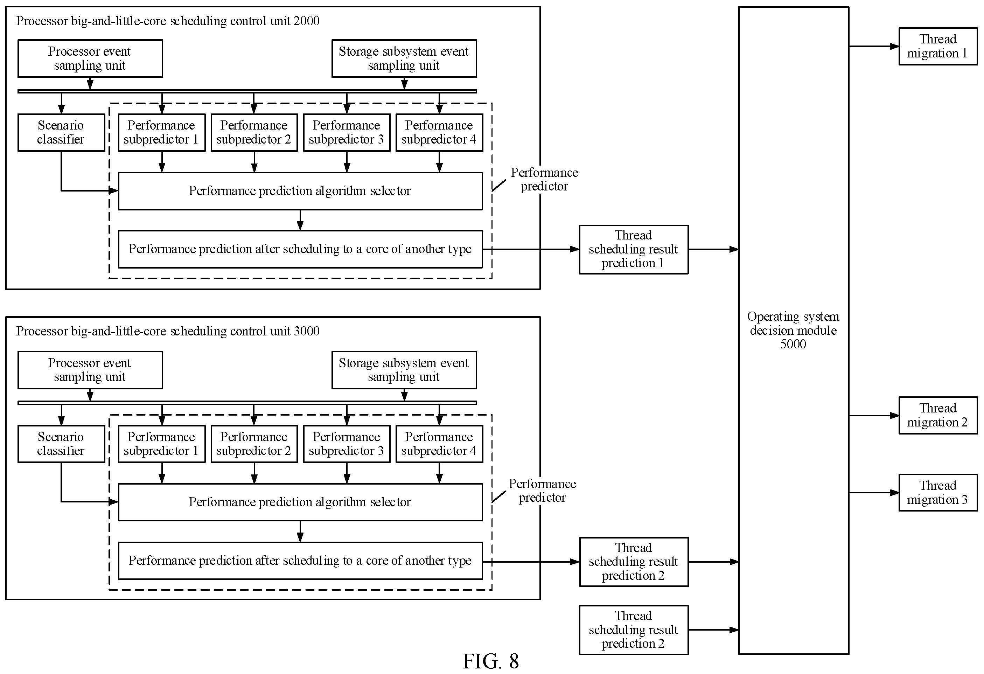

For example, as shown in FIG. 8, FIG. 8 is a diagram of big-and-little-core scheduling according to an embodiment of the present invention. A heterogeneous processor in the figure may include a processor big-and-little-core scheduling control unit 2000, a processor big-and-little-core scheduling control unit 3000, and an operating system decision module 5000. The operating system decision module 5000 is a software part. The processor big-and-little-core scheduling control unit 2000 and the processor big-and-little-core scheduling control unit 3000 may be implemented by using software or hardware. A processor event sampling unit and a storage subsystem event sampling unit in the processor big-and-little-core scheduling control unit 2000 are sampled and collected, and are configured to: obtain statuses of a processor and a storage subsystem, and identify a service characteristic of an instruction stream executed in a processor system. A scenario classifier in the processor big-and-little-core scheduling control unit 2000 samples processor and storage subsystem events by using the processor event sampling unit and the storage subsystem event sampling unit. Load scenario classification is performed by using the scenario classifier, and a load scenario classification is output to a next-level performance prediction algorithm selector. A performance subpredictor 1, a performance subpredictor 2, a performance subpredictor 3, and a performance subpredictor 4 are performance predictors of different scenarios. The performance predictor predicts, based on different performance prediction algorithms, performance of a thread, of a current processor, migrated to another processor core of a different type. Output of the performance predictor is the performance of the thread, of the current processor, migrated to the another processor core of the different type, and a result of the output may be a correlation coefficient, or may be an enumerated value, for example, a significant improvement, a slight improvement, basically no change, a slight decrease, or a significant decrease. The operating system decision module 5000 collects thread scheduling result prediction information of all cores. The thread scheduling prediction information of all the cores is summarized, to determine an overall scheduling manner.

In this application, a scenario classifier in the processor core may obtain running information of a thread, of a current processor core, running a target service (which may include an instruction stream characteristic and a memory running characteristic of running the target service by the processor core), to determine a service scenario of the target service based on the running information. Next, a performance predictor in the processor core may predict, based on the running information of the current processor core and the service scenario of the target service, performance of the thread, of the current processor core, migrated to another processor core of a different type, so that a scheduling policy of the thread can be subsequently determined based on a prediction result, to improve performance of the heterogeneous processor or improve energy efficiency of the heterogeneous processor. In some embodiments, coarse-grained performance prediction is performed only based on information such as processor core utilization of an application (that is, a service) collected by a processor subsystem, and a real-time requirement cannot be met. Consequently, performance and energy efficiency are lost during scheduling.

The heterogeneous processor in embodiments of the present invention is described in detail above, and a related method in an embodiment of the present invention is provided below.

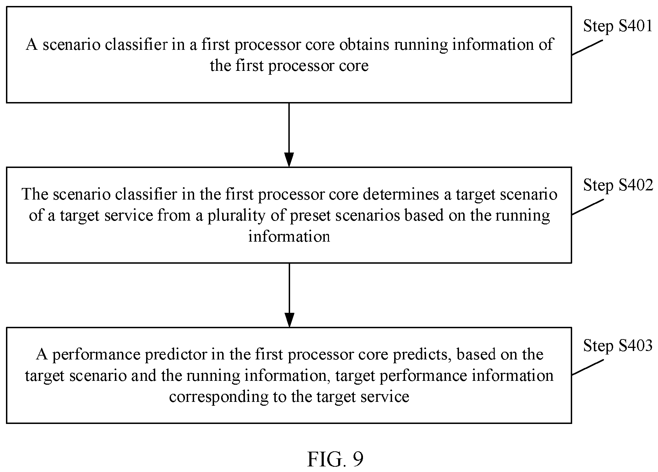

FIG. 9 is a flowchart of a scheduling method according to an embodiment of the present invention. The method is applicable to the heterogeneous processor in FIG. 2 and a device including the heterogeneous processor. The heterogeneous processor includes a plurality of processor cores of different sizes, and each of the plurality of processor cores includes a scenario classifier and a performance predictor. The method may include the following step S401 to step S403. Detailed descriptions are as follows.

Step S401: A scenario classifier in a first processor core obtains running information of the first processor core.

Specifically, the running information includes one or more of an instruction stream characteristic and a memory running characteristic of running a target service by the first processor core, and the first processor core is any one of the plurality of processor cores.

Step S402: The scenario classifier in the first processor core determines a target scenario of the target service from a plurality of preset scenarios based on the running information.

Step S403: A performance predictor in the first processor core predicts, based on the target scenario and the running information, target performance information corresponding to the target service.

Specifically, the target performance information includes performance prediction information of the target service scheduled to the plurality of processor cores.

In a possible implementation, the performance predictor in each processor core includes a plurality of performance subpredictors and a target selector, and each of the plurality of performance subpredictors corresponds to a performance prediction algorithm of one preset scenario. Predicting, based on the target scenario and the running information, the target performance information corresponding to the target service includes: determining corresponding performance information by using each performance subpredictor based on the corresponding performance prediction algorithm of the preset scenario and the running information of the first processor core; and obtaining, by using the target selector, a plurality of pieces of performance information respectively corresponding to the plurality of performance subpredictors, and determining the target performance information from the plurality of pieces of performance information based on the target scenario.

In a possible implementation, predicting, based on the target scenario and the running information, the target performance information corresponding to the target service includes: determining, from a plurality of performance prediction algorithms, a target performance prediction algorithm corresponding to the target scenario, where the plurality of performance prediction algorithms are in a one-to-one correspondence with the plurality of preset scenarios; and determining the target performance information based on the running information of the first processor core and the target performance prediction algorithm.

In a possible implementation, the method further includes: The performance predictor in the first processor core determines, based on sample data, the plurality of preset scenarios and the plurality of performance prediction algorithms respectively corresponding to the plurality of preset scenarios, where the sample data includes instruction stream characteristics and memory running characteristics respectively corresponding to the plurality of preset scenarios.

In a possible implementation, an operating system runs on the heterogeneous processor, and the method further includes: The performance predictor in the first processor core sends the target performance information to the operating system. The operating system determines a second processor core from the plurality of processor cores based on the target performance information, and schedules the target service to the second processor core for processing.

In a possible implementation, the first processor core further includes a first sampling unit and a second sampling unit, and the method further includes: The first sampling unit obtains the instruction stream characteristic of running the target service by the first processor core, where the instruction stream characteristic includes one or more of a type of an instruction, a quantity of instructions, and a dynamic event of the processor core. The second sampling unit obtains the memory running characteristic of running the target service by the first processor core, where the memory running characteristic includes one or more of access bandwidth, an access latency, a miss rate, and a request queue occupancy rate.

In this application, a scenario classifier in the processor core may obtain running information of a thread, of a current processor core, running a target service (which may include an instruction stream characteristic and a data access characteristic of running the target service by the processor core), to determine a service scenario of the target service based on the running information. Next, a performance predictor in the processor core may predict, based on the running information of the current processor core and the service scenario of the target service, performance of the thread, of the current processor core, migrated to another processor core of a different type, so that a scheduling policy of the thread can be subsequently determined based on a prediction result, to improve performance of the heterogeneous processor or improve energy efficiency of the heterogeneous processor. In some embodiments, coarse-grained performance prediction is performed only based on information such as processor core utilization of an application (that is, a service) collected by a processor subsystem, and a real-time requirement cannot be met. Consequently, performance and energy efficiency are lost during scheduling.

This application provides a computer storage medium. The computer storage medium stores a computer program. When the computer program is executed by a processor, any one of the foregoing scheduling methods is implemented.

An embodiment of this application provides an electronic device. The electronic device includes a processor, and the processor is configured to support the electronic device in implementing corresponding functions in any one of the foregoing scheduling methods. The electronic device may further include a memory. The memory is configured to be coupled to the processor, and the memory stores program instructions and data that are necessary for the electronic device. The electronic device may further include a communication interface used for communication between the electronic device and another device or a communication network.

This application provides a chip system. The chip system includes a processor configured to support an electronic device in implementing the foregoing functions, for example, generating or processing information in the foregoing scheduling method. In a possible design, the chip system further includes a memory, and the memory is configured to store program instructions and data that are necessary for the electronic device. The chip system may include a chip, or may include a chip and another discrete component.

This application provides a computer program product. The computer program includes instructions. When the computer program is executed by a computer, the computer is enabled to perform the foregoing scheduling method.

In the foregoing embodiments, the descriptions of embodiments have respective focuses. For a part that is not described in detail in one embodiment, reference may be made to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of software functional unit.

When the foregoing integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, a network device, or the like, and may be specifically a processor in the computer device) to perform all or some of the steps of the methods in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the spirit and scope of the technical solutions of embodiments of this application.

## Claims

1. A heterogeneous processor, wherein the heterogeneous processor comprises a plurality of processor cores of different sizes, and each of the plurality of processor cores comprises a scenario classifier and a performance predictor, wherein
a scenario classifier in a first processor core is configured to: obtain running information of the first processor core, wherein the running information comprises one or more of an instruction stream characteristic and a memory running characteristic of running a target service by the first processor core, and the first processor core is any one of the plurality of processor cores; and determine a target scenario of the target service from a plurality of preset scenarios based on the running information; and
a performance predictor in the first processor core is configured to: predict target performance information based on the target scenario and the running information, wherein the target performance information is performance prediction information corresponding to the target service.

2. The heterogeneous processor according to claim 1, wherein the performance predictor in each processor core comprises a plurality of performance subpredictors and a target selector, and each of the plurality of performance subpredictors corresponds to a performance prediction algorithm of one preset scenario; and the performance predictor in the first processor core is specifically configured to:
determine corresponding performance information by using each performance subpredictor based on the corresponding performance prediction algorithm of the preset scenario and the running information of the first processor core; and
obtain, by using the target selector, a plurality of pieces of performance information respectively corresponding to the plurality of performance subpredictors, and determine the target performance information from the plurality of pieces of performance information based on the target scenario.

3. The heterogeneous processor according to claim 1, wherein the performance predictor in the first processor core is specifically configured to:
determine, from a plurality of performance prediction algorithms, a target performance prediction algorithm corresponding to the target scenario, wherein the plurality of performance prediction algorithms are in a one-to-one correspondence with the plurality of preset scenarios; and
determine the target performance information based on the running information of the first processor core and the target performance prediction algorithm.

4. The heterogeneous processor according to claim 2 or 3, wherein the performance predictor in the first processor core is further configured to:
determine, based on sample data, the plurality of preset scenarios and the plurality of performance prediction algorithms respectively corresponding to the plurality of preset scenarios, wherein the sample data comprises instruction stream characteristics and memory running characteristics respectively corresponding to the plurality of preset scenarios.

5. The heterogeneous processor according to any one of claims 1 to 4, wherein an operating system runs on the heterogeneous processor;
the performance predictor in the first processor core is further configured to send the target performance information to the operating system; and
the operating system is configured to: determine a second processor core from the plurality of processor cores based on the target performance information, and schedule the target service to the second processor core for processing.

6. The heterogeneous processor according to any one of claims 1 to 5, wherein the first processor core further comprises a first sampling unit and a second sampling unit, wherein
the first sampling unit is configured to obtain the instruction stream characteristic of running the target service by the first processor core, wherein the instruction stream characteristic comprises one or more of a type of an instruction, a quantity of instructions, and a dynamic event of the processor core; and
the second sampling unit is configured to obtain the memory running characteristic of running the target service by the first processor core, wherein the memory running characteristic comprises one or more of access bandwidth, an access latency, a miss rate, and a request queue occupancy rate.

7. A scheduling method, applied to a heterogeneous processor, wherein the heterogeneous processor comprises a plurality of processor cores of different sizes, and each of the plurality of processor cores comprises a scenario classifier and a performance predictor; and the method comprises:
obtaining, by a scenario classifier in a first processor core, running information of the first processor core, wherein the running information comprises one or more of an instruction stream characteristic and a memory running characteristic of running a target service by the first processor core, and the first processor core is any one of the plurality of processor cores; and determining a target scenario of the target service from a plurality of preset scenarios based on the running information; and
predicting, by a performance predictor in the first processor core, target performance information based on the target scenario and the running information, wherein the target performance information is performance prediction information corresponding to the target service.

8. The method according to claim 7, wherein the performance predictor in each processor core comprises a plurality of performance subpredictors and a target selector, and each of the plurality of performance subpredictors corresponds to a performance prediction algorithm of one preset scenario; and predicting the target performance information based on the target scenario and the running information comprises:
determining corresponding performance information by using each performance subpredictor based on the corresponding performance prediction algorithm of the preset scenario and the running information of the first processor core; and
obtaining, by using the target selector, a plurality of pieces of performance information respectively corresponding to the plurality of performance subpredictors, and determining the target performance information from the plurality of pieces of performance information based on the target scenario.

9. The method according to claim 7, wherein predicting the target performance information based on the target scenario and the running information comprises:
determining, from a plurality of performance prediction algorithms, a target performance prediction algorithm corresponding to the target scenario, wherein the plurality of performance prediction algorithms are in a one-to-one correspondence with the plurality of preset scenarios; and
determining the target performance information based on the running information of the first processor core and the target performance prediction algorithm.

10. The method according to claim 8 or 9, wherein the method further comprises:
determining, by the performance predictor in the first processor core based on sample data, the plurality of preset scenarios and the plurality of performance prediction algorithms respectively corresponding to the plurality of preset scenarios, wherein the sample data comprises instruction stream characteristics and memory running characteristics respectively corresponding to the plurality of preset scenarios.

11. The method according to any one of claims 7 to 10, wherein an operating system runs on the heterogeneous processor, and the method further comprises:
sending, by the performance predictor in the first processor core, the target performance information to the operating system; and
determining, by the operating system, a second processor core from the plurality of processor cores based on the target performance information, and scheduling the target service to the second processor core for processing.

12. The method according to any one of claims 7 to 11, wherein the first processor core further comprises a first sampling unit and a second sampling unit, and the method further comprises:
obtaining, by the first sampling unit, the instruction stream characteristic of running the target service by the first processor core, wherein the instruction stream characteristic comprises one or more of a type of an instruction, a quantity of instructions, and a dynamic event of the processor core; and
obtaining, by the second sampling unit, the memory running characteristic of running the target service by the first processor core, wherein the memory running characteristic comprises one or more of access bandwidth, an access latency, a miss rate, and a request queue occupancy rate.

13. A computer storage medium, wherein the computer storage medium stores a computer program, and when the computer program is executed by a processor, the method according to any one of claims 7 to 12 is implemented.

14. A computer program product, wherein the computer program comprises instructions, and when the computer program is executed by a computer or a processor, the computer or the processor is enabled to perform the method according to any one of claims 7 to 12.
